# EUROPÄISCHE PATENTANMELDUNG

(11) **EP 2 020 316 A1**
(43) Veröffentlichungstag der Anmeldung: **04.02.2009**
(21) Anmeldenummer: 08013005.7
(22) Anmeldetag: 18.07.2008
(51) Int. Cl.: B60H 1/00, B60H 1/32, F02B 29/04, F28D 20/02

(54) **Speicher zum Kühlen eines zur Motoraufladung vorgesehenen im wesentlichen gasförmigen Fluids**

(30) Priorität: 31.07.2007 DE 102007036303
(71) Anmelder: Behr GmbH & Co. KG, 70469 Stuttgart (DE)
(72) Erfinder: Feldhaus, Georg, 70374 Stuttgart (DE); Pantow, Eberhard, 71364 Winnenden (DE)

(57) **Zusammenfassung**

Die Erfindung geht aus von einem Speicher (1) zum Speichern eines Kältepotenzials, aufweisend: Eine zur Aufladung des Kältepotenzials vorgesehene erste Strömungsführung für ein Kältefluid (31); eine zur Motoraufladung vorgesehene zweite Strömungsführung für ein im Wesentlichen gasförmiges Aufladefluid, wobei zur Verbesserung der Kühlung des Aufladefluids erfindungsgemäß vorgesehen ist, dass das Kältepotenzial zur Kühlung des zur Motoraufladung vorgesehenen gasförmigen Aufladefluids vorgesehen ist. Die Erfindung führt auch auf einen Kreislauf zur Motoraufladung mit dem Speicher sowie ein System aus dem Kreislauf und einer Klimaanlage sowie ein Verfahren zum Kühlen eines zur Motoraufladung vorgesehenen im Wesentlichen gasförmigen Fluids.

## Beschreibung

Die Erfindung betrifft einen Speicher zum Speichern eines Kältepotenzials, aufweisend: eine zur Aufladung des Kältepotenzials vorgesehene erste Strömungsführung für ein Kältefluid. Die Erfindung betrifft weiter einen Kreislauf zur Motoraufladung, eine Klimaanlage und ein System aus dem Kreislauf und der Klimaanlage. Die Erfindung betrifft auch ein Verfahren zum Kühlen eines zur Motoraufladung vorgesehenen im Wesentlichen gasförmigen Fluids.

Ein Speicher der eingangs genannten Art ist bekannt für den Klimatisierungsbetrieb eines Fahrzeuginnenraums. Wird in einem Fahrzeug die Kälteleistung aus dem Klimakreislauf für die Innenraumklimatisierung verwendet, wird die einer Antriebswelle zur Verfügung gestellte Gesamtleistung des Motors durch die für einen Kältekompressor aufzubringende Kompressorleistung reduziert.

Um einen für den Kompressorantrieb nötigen Kraftstoffverbrauch weitestgehend zu verringern und gleichzeitig einen Klimatisierungsbetrieb für den Fahrzeuginnenraum weitgehend aufrecht zu erhalten, sieht DE 199 14 443 A1 grundsätzlich vor, den Kältekompressor für die Klimaanlage im Motorschubbetrieb zu betreiben und in allen anderen Betriebsphasen des Motors möglicherweise abzuschalten. Darüber hinaus sieht DE 10 2004 060 000 B3 eine verbesserte Regelung des Kompressors vor, wobei eine Speicherung der Kälteleistung durch Absenkung eines Temperaturniveaus der Verdampfer-Solltemperatur erreicht wird.

Wünschenswert wäre es, nicht nur bei grundsätzlich reduzierter Kältekompressorleistung den Klimatisierungsbetrieb im Fahrzeuginneren weitgehend aufrechtzuerhalten, sondern darüber hinaus eine Motorleistung zu erhöhen und ein ausgewogenes Verhältnis bei unterschiedlichen Betriebszuständen eines Motors zur Verfügung zu stellen. Der zuvor genannte Stand der Technik betrachtet lediglich die Möglichkeit der Reduzierung einer Kompressorantriebsleistung ausschließlich unter Berücksichtigung einer Innenraumklimatisierung. Solche bekannte Konzepte sind noch verbesserungswürdig.

An dieser Stelle setzt die Erfindung an, deren Aufgabe es ist, einen Speicher, einen Kreislauf, eine Klimaanlage, ein System und ein Verfahren zum Kühlen eines zur Motoraufladung vorgesehenen im wesentlichen gasförmigen Fluids zur Verfügung zu stellen. Es soll nicht nur eine Reduzierung der Kompressorantriebsleistung bei im wesentlichen aufrechterhaltener Innenraumklimatisierung erreicht werden, sondern darüber hinaus, im Rahmen eines erweiterten Konzepts, eine Motorleistung positiv beeinflusst werden.

Die Aufgabe wird betreffend den Speicher durch die Erfindung mit einem Speicher der eingangs genannten Art gelöst, bei dem eine zur Motoraufladung vorgesehene zweite Strömungsführung für ein im Wesentlichen gasförmiges Aufladefluid vorgesehen ist, wobei das Kältepotenzial zur Kühlung des zur Motoraufladung vorgesehenen gasförmigen Aufladefluids vorgesehen ist.

Dementsprechend führt die Erfindung auf einen Kreislauf zur Motoraufladung mit einem Speicher der genannten Art zum Speichern eines Kältepotenzials.

Die Erfindung sieht damit erstmals vor, dass grundsätzlich eine beim Betrieb eines Fahrzeugs auftretende überschüssige Kälteleistung in vorteilhafter Weise zur Leistungssteigerung eines Motors genutzt werden kann, indem das Käftepotenzial zur Kühlung eines zur Motoraufladung vorgesehenen gasförmigen Aufladefluids vorgesehen ist. Dazu ist der Speicher mit einer zur Motoraufladung vorgesehenen zweiten Strömungsführung versehen, welche insbesondere eine Zuführung und eine Abführung umfasst. Die Strömungsführung ist für ein im Wesentlichen gasförmiges Aufladefluid vorgesehen. Als Aufladefluid erweist sich insbesondere eine Ladeluft und/oder ein Abgas oder Mischungen, aufweisend eine Ladeluft und/oder ein Abgas als vorteilhaft. Dadurch werden in besonders vorteilhafter Weise auch Schadstoffwerte reduziert und insgesamt kann ein Kraftstoffverbraucht verringert werden.

In einem weitergehenden Konzept ist - dem wesentlichen Gedanken der Erfindung folgend - darüber hinaus vorgesehen, dass eine überschüssige Kälteleistung in vorteilhafter Weise einer Klimaanlage entnommen werden kann. Dazu ist insbesondere vorgesehen, dass bei dem erfindungsgemäßen Speicher die erste Strömungsführung fluidverbindbar mit einem Verdampfer und/oder Kondensator einer Klimaanlage ausgelegt ist. Auf diese Weise ist es erstmals möglich, dem erfindungsgemäßen Speicher in einem weitergehenden Konzept überschüssige Kälteleistung einer Klimaanlage zur Verfügung zu stellen.

Dementsprechend führt das weitergehende Konzept der Erfindung auf eine Klimaanlage mit einem Verdampfer und/oder Kondensator, der oder die fluidverbunden mit einer zur Aufladung des Kältepotenzials vorgesehenen ersten Strömungsführung für ein Kältefluid des Speichers und/oder des oben genannten Kreislaufs verbunden ist. Die Erfindung geht damit in erfinderischer Weise wesentlich über die auf die Nutzung des Kältekreises zur Innenraumklimatisierung beschränkten Ansätze des Standes der Technik hinaus. Vielmehr wird die im Rahmen der Innenraumklimatisierung vielfach überschüssige Kälteleistung zusätzlich zur Ladeluftkühlung berücksichtigt.

Die Erfindung geht von der Überlegung aus, dass die Kälteleistung einer Fahrzeugklimaanlage regelmäßig für die Abkühlung des Fahrzeuginnenraums unter vergleichsweise extremen Bedingungen ausgelegt ist. Diese Fälle, z. B. eine erwünschte schnelle Abkühlung eines in der Sonne stehenden Fahrzeugs, treten nur vergleichsweise kurzzeitig auf. Darüber hinaus steht bei den in Mitteleuropa herrschenden gemäßigten Bedingungen bei einer bereits abgekühlten Fahrzeugkabine regelmäßig überschüssige Kälteleistung zur Verfügung, die für die Abkühlung des dem Verbrennungsmotor zugeführten Ladefluids, Luft und/oder Abgas, gemäß dem weitergehenden Konzept der Erfindung verwendet werden kann. Durch diese Maßnahme kann zusätzlich der spezifische Kraftstoffverbrauch des Verbrennungsmotors weiter reduziert werden bzw. der Motor kann mehr Leistung an die Antriebswelle abgeben.

Gemäß dem weitergehenden Konzept der Erfindung ist entsprechend bei einem Kreislauf die erste Strömungsführung zum Aufladen des Kältepotenzials für Kältefluid mit einem Verdampfer und/oder Kondensator einer Klimaanlage fluidverbunden. Insbesondere kann die erste Strömungsführung zur Aufladung des Kältepotenzials für ein Kältefluid an einen Kältemittelkreislauf einer Klimaanlage angeschlossen sein.

Insbesondere kann dazu der Speicher zum Speichern eines Kältepotenzials zu dem Verdampfer und/oder Kondensator der Klimaanlage parallel geschaltet sein. Vorzugsweise ist bei dieser Schaltung der Kondensator zur Versorgung sowohl des Speichers zum Speichern eines Kältepotenzials als auch des Verdampfers der Klimaanlage ausgelegt.

Vorzugsweise kann ein Kompressor des zur Motoraufladung vorgesehenen im Wesentlichen gasförmigen Fluids und/oder ein separater Kältemittelkompressor zum Betrieb des Kondensators vorgesehen sein.

In einem noch weitergehenden Konzept der Erfindung wird die Aufgabe hinsichtlich des Speichers durch einen Speicher der vorgenannten Art gelöst, bei dem erfindungsgemäß vorgesehen ist, dass zum Aufladen des Kältepotenzials eine vom Betriebszustand des Motors abhängige Beströmung der zweiten Strömungsführung erfolgen kann.

Beispielsweise kann ein Bypassorgan zur vom Betriebszustand des Motors abhängigen Beströmung der zweiten Strömungsführung vorgesehen sein.

Gemäß dem noch weitergehenden Konzept der Erfindung ist entsprechend ein Kreislauf der oben genannten Art erfindungsgemäß zum Aufladen des Kältepotenzials mit Mitteln zu einer vom Betriebszustand des Motors abhängigen Beströmung der zweiten Strömungsführung versehen. Insbesondere kann dazu Ladefluid stromaufwärts des Speichers ein Bypassorgan, beispielsweise eine Bypassklappe, vorgeschaltet sein.

Vorzugsweise ist eine Bypassklappe nur zur Umgehung des Speichers vorgesehen, das heißt mit anderen Werten, ein Ladefluid wird bei Bedarf, beispielsweise in einem Schubbetriebszustand des Motors, vor dem Speicher abgezweigt, am Speicher vorbeigeführt und hinter den Speicher - also vom Speicher nicht mehr zusätzlich gekühlt - dem Motor zugeführt.

Gemäß diesem noch weitergehenden Konzept der Erfindung geht diese von der Überlegung aus, dass die Bereitstellung der Leistung des Kältekompressors für den Betrieb des Kältekreislaufs regelmäßig auch zu Lasten des Verbrennungsmotors geht und sich dennoch - auch angesichts der oben erreichbaren Vorteile - in einem, wenn auch vergleichsweise gering erhöhten Kraftstoffverbrauch äußert. Gemäß dem noch weitergehenden Konzept der Erfindung wurde erkannt, dass hieraus ein Zielkonflikt zwischen aufgewendeter Kompressorleistung und reduziertem Kraftstoffverbrauch am Verbrennungsmotor erwächst. Als Beispiel sei ein Beschleunigungsvorgang betrachtet. Hierbei ist eine erhöhte Leistung des Motors durch die zusätzliche Kühlung eines Aüfladefluids erwünscht. Die zur Aufbringung der Kälteleistung notwendige Kältekompressorleistung reduziert dagegen die Leistung um einen gewissen Betrag.

Gemäß dem oben definierten Ansatz beim erfindungsgemäßen Speicher und erfindungsgemäßen Kreislauf gemäß dem noch weitergehenden Konzept der Erfindung wird zur Reduzierung des für den Kompressorantrieb nötigen Kraftstoffverbrauchs eine Verlagerung der Phase bei laufendem Kompressor in die Motorbetriebsphase mit Schubbetrieb erreicht. Im Schubbetrieb kann die Kraftstoffzufuhr des Motors unterbrochen werden. Dadurch wird gemäß dem noch weitergehenden Konzept der Erfindung die Kältekompressorleistung und damit die Kälteleistung ohne Kraftstoffmehrverbrauch zur Verfügung gestellt und, wie oben erläutert, über die begrenzten Ansätze des Standes der Technik hinausgehend, zusätzlich die überschüssige Kälteleistung der Klimaanlage zur Leistungssteigerung des Motors genutzt.

Die Erfindung verknüpft somit gemäß dem noch weitergehenden Konzept zwei Aspekte: Zum einen wird hier aus Sicht der Innenraumklimatisierung theoretisch überschüssige Kälteleistung zur Leistungssteigerung und gleichzeitigen Verbrauchsreduzierung des Motors genutzt. Darüber hinaus wird durch die Verlagerung der Kompressorbetriebszeiten in den Motorschubbetrieb eine erstmalig konzipierte Erhöhung einer Ladefluidkühlung, d.h. eine Ladefluidunterkühlung, erreicht.

Es hat sich gezeigt, dass es bei dieser Ausbaustufe der grundsätzlichen erfinderischen Idee gemäß einer weiteren Erkenntnis der Erfindung sinnvoll ist, weitere Bedingungen betreffend dem Motorbetrieb zu beachten, was durch die oben genannten Mittel zu einer vom Betriebszustand des Motors abhängigen Beströmung der zweiten Strömungsführung erreicht wird. Insbesondere ergibt sich der Vorteil, dass eine extreme Kühlung eines Ladefluids durch den Kältespeicher nicht für alle Motorbetriebspunkte zwangsläufig erfolgen muss, sondern ein alternativer Pfad unter Umgehung des Speichers für das Ladefluid zur Verfügung gestellt wird. Die Mittel können beispielsweise auch regelbar sein und mit einer Motorsteuerung verbunden sein.

Für eine besonders vorteilhafte Speicherung einer, beispielsweise während der Bypassphasen, durch den Kompressor bereitgestellten Kälteleistung hat sich insbesondere ein Speicherverdampfer als besonders vorteilhaft erwiesen. Ein Speicherverdampfer kann insbesondere mit einem Speicherraum zur Aufnahme eines Latentmediums und einem Verdampferraum zur strömenden Aufnahme des Kältefluids versehen sein. Durch eine Verdampfung des Kältemittels im Speicherverdampfer kann dem das Kältemittel umgebenden Latentmedium Wärme entzogen werden, so dass dieses beispielsweise von einer flüssigen in eine feste Phase übergeht. Die dadurch im Latentmedium gespeicherte Kälte kann, wie erläutert, zur weiteren Kühlung eines Ladefluids vorgesehen sein.

Insbesondere kann in einem Speicherverdampfer ein relativ zueinander außenliegender Speicherraum zur Aufnahme des Latentmediums und ein innenliegender Verdampferraum zur strömenden Aufnahme des Kältefluids vorgesehen sein. Das Latentmedium ist zweckmäßigerweise im Betriebsbereich grundsätzlich erstarrungsfähig (beispielsweise in Form eines Alkohols), und/oder das Kältefluid ist im Betriebsbereich grundsätzlich verdampfungsfähig (beispielsweise in Form eines R134a-Kältefluids).

In besonders bevorzugter Weise können ein Speicherraum und ein Verdampferraum in einem zweischaltigen Rohr gebildet sein, wobei eine Anzahl solcher Rohre in einem Gehäuse eines Speicherverdampfers angeordnet sein können.

Insgesamt wird durch die grundsätzliche oben erläuterte erfinderische Idee und vorzugsweise durch die in Zusammenhang damit erläuterten weitergehenden Konzepte der Erfindung, insbesondere in ihrer vollen Ausbaustufe, erstmals ein Ansatz erbracht, der es ermöglicht, ein besonders hohes Einsparpotenzial bzw. praktisch das volle Einsparpotenzial, zur Verbrauchsreduzierung durch Ladeluftkühlung und Nutzung des Schubbetriebs eines Verbrennungsmotors zu nutzen.

Weitere vorteilhafte Weiterbildungen der Erfindung sind den Unteransprüchen zu entnehmen und geben im einzelnen vorteilhafte Möglichkeiten an, das oben erläuterte Konzept im Rahmen der Aufgabenstellung, sowie hinsichtlich weiterer Vorteile zu realisieren.

Vorzugsweise ist die zweite Strömungsführung, insbesondere die zur Motoraufladung vorgesehene Zuführung für ein im Wesentlichen gasförmiges Aufladefluid, fluidverbindbar mit einem Wärmetauscher, insbesondere mit einem Ladeluftkühler und/oder einem Abgaskühler, ausgelegt. Es hat sich als vorteilhaft erwiesen, dass das Konzept einer Ladefluidunterkühlung zusätzlich zu einer Kühlung des Ladefluids durch einen Wärmetauscher vorgesehen ist.

Vorzugsweise ist, betreffend den Speicher, die zweite Strömungsführung
- insbesondere die zur Motoraufladung vorgesehene Abführung - für ein im Wesentlichen gasförmiges Aufladefluid, fluidverbindbar mit einer Brennkraftmaschine ausgelegt. Dies hat den Vorteil, dass der Speicher praktisch unmittelbar benachbart zum Motor angeordnet werden kann. Beispielsweise kann eine Abführung direkt an einen Krümmeranschluß des Motors angeschlossen sein.

Dementsprechende Weiterbildungen sind bei einem Kreislauf zur Motoraufladung gemäß dem Konzept der Erfindung vorgesehen. Grundsätzlich kann dies ein Ladeluftkreislauf und/oder ein Abgasrückführkreislauf sein.

Es hat sich als vorteilhaft erwiesen, dass ein Kompressor des zur Motoraufladung vorgesehenen im Wesentlichen gasförmigen Fluids und/oder ein separater Kältemittelkompressor zum Betrieb des Kondensators ausgelegt ist. In jedem Fall kann eine dafür notwendige Kompressorleistung in vorteilhafter Weise der Schubbetriebsphase eines Motors entnommen werden.

Vorzugsweise ist ein zum Aufladen des Kältepotenzials geeignetes Mittel zu einer vom Betriebszustand des Motors abhängigen Beströmung der zweiten Strömungsführung vorgesehen, insbesondere im Rahmen des Kreislaufs ist ein solches Mittel Ladefluid-stromaufwärts des Speichers als Bypassorgan, beispielsweise als eine Bypassklappe oder ein Ventil, vorgeschaltet.

Wie erläutert, kann dem Bypassorgan ein Wärmetauscher vorgeschaltet sein.

Stromabwärts des Speichers ist bei einem Kreislauf in vorteilhafter Weise, wie erläutert, der Motor nachgeschaltet. Weiter kann stromabwärts des Motors eine Abgasturbine nachgeschaltet sein, insbesondere eine Abgasturbine, die antriebsseitig an einen Kompressor gekoppelt ist. Vorzugsweise kann dies ein Ladefluidkompressor und/oder ein separater Kältemittelkompressor sein. Vorzugsweise ist der Kompressor zum Betrieb des Kondensators vorgesehen.

Die Erfindung führt gemäß dem oben erläuterten Konzept und/oder einer oder mehreren Weiterbildungen desselben auch auf ein System aus einem Kreislauf und/oder einer Klimaanlage der genannten Art. Insbesondere kann dazu der Speicher zum Speichern eines Kältepotenzials zu dem Verdampfer und/oder Kondensator der Klimaanlage parallel geschaltet sein. Dabei hat sich insbesondere als vorteilhaft erwiesen, dass der Kondensator zur Versorgung sowohl des Speichers als auch zum Speichern eines Kältepotenzials auch des Verdampfers der Klimaanlage ausgelegt ist.

Vorzugsweise weist das System zusätzlich einen Kühlmittelkreislauf zur Motorkühlung auf, der zweckmäßigerweise einen zusätzlichen Kühlmittelkühler aufweist.

Gemäß einer Weiterbildung hat es sich als vorteilhaft erwiesen, im Kühlmittelkreislauf eine Pumpe und/oder ein Leitmittel, beispielsweise ein Dreiwegeventil, zur weiteren Führung des Kühlmittels zum Motor und/oder am Motor vorbei vorzusehen. Je nach Betriebszustand eines Motors kann es vorteilhaft sein, mehr oder weniger Kühlmittel dem Motor zur Kühlung zuzuführen.

Die Aufgabe hinsichtlich des Verfahrens wird durch die Erfindung mit einem Verfahren zum Kühlen eines zur Motoraufladung vorgesehenen im Wesentlichen gasförmigen Fluids gelöst, das erfindungsgemäß die Schritte aufweist:
- Bereitstellen des gasförmigen Fluids zur Motoraufladung an einer zur Motoraufladung vorgesehen zweiten Strömungsführung für das im Wesentlichen gasförmige Aufladefluid eines Speichers zum Speichern eines Kältepotenzials;
- Durchführen und Kühlen des gasförmigen Aufladefluids in den Speicher zum Speichern eines Kältepotenzials unter Abgabe des Kältepotenzials an das Aufladefluid;
- Aufladen des Kältepotenzials des Speichers über eine erste Strömungsführung für ein Kältefluid

Das Verfahren realisiert das grundsätzliche Konzept der Erfindung. In besonders vorteilhafter Weise wird das gasförmige Fluid zur Motoraufladung bereits in komprimierter und/oder vorgekühlter Form, beispielsweise durch einen Wärmetauscher, zur Verfügung gestellt. Eine Strömungsführung kann insbesondere in Form einer Zuführung und einer Abführung realisiert sein.

Gemäß dem weitergehenden Konzept der Erfindung hat es sich als vorteilhaft erwiesen, dass das Aufladen eines Verdampfers einer Klimaanlage über einen gemeinsamen Kondensator erfolgt, insbesondere unter Nutzung eines dafür vorgesehenen Kompressorantriebs zum Komprimieren des Kühlmittels, und zwar zusammen mit dem Aufladen des Kältepotenzials des Speichers über eine erste Strömungsführung. Gemäß dem weitergehenden Konzept der Erfindung kann also in vorteilhafter Weise eine von der Klimaanlage überschüssig zur Verfügung stehende Kältemenge in einem Speicher gemäß dem erfindungsgemäßen Verfahren gespeichert werden.

Einem noch weitergehenden Konzept der Erfindung folgend hat es sich als vorteilhaft erwiesen, dass ein Aufladen des Speichers vorzugsweise außerhalb eines Vortriebszustandes, insbesondere Beschleunigungszustand, des Motors erfolgt. In besonders bevorzugter Weise erfolgt ein Aufladen des Speichers in einem Schubbetriebszustand des Motors, insbesondere kann vorgesehen sein, dass ein Aufladen des Speichers immer bzw. immer nur in einem Schubbetriebszustand des Motors erfolgt.

Entsprechend kann in einer darauf abgestimmten Weise gemäß einer weiteren Weiterbildung ein Öffnen eines Bypasses für das gasförmige Aufladefluid unter Umgehung des Speichers im Schubbetrieb erfolgen. Vorzugsweise erfolgt eine Umgehung des Speichers nur im Schubbetrieb des Motors.

Des Weiteren kann in einer besonders bevorzugten Weiterbildung des Verfahrens ein Abschalten des Aufladens des Kältepotenzials des Speichers im Volllastbetrieb, vorzugsweise nur im Volllastbetrieb erfolgen. Vorzugsweise ist dazu eine Bypass-Schließung vorgesehen.

Das Verfahren hat sich als besonders effektiv erwiesen für den Fall, dass eine Verdampfersolltemperatur oberhalb von 1,6°C, vorzugsweise oberhalb von 5°C, insbesondere oberhalb von 8°C liegt. Dazu kann insbesondere ein Toleranzbereich im Bereich von 1 bis 3 Kelvin bzw. zu 5 Kelvin vorgesehen sein.

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein.

Vorteilhaft ist, dass die zweite Strömungsführung, insbesondere die zur Motoraufladung vorgesehene Zuführung für ein im wesentlichen gasförmiges Aufladefluid, fluidverbindbar mit einem Wärmetauscher, insbesondere mit einem Ladeluftkühler und/oder einem Abgaskühler, ausgelegt ist.

Vorteilhaft ist, dass die zweite Strömungsführung, insbesondere die zur Motoraufladung vorgesehene Abführung für ein im Wesentlichen gasförmiges Aufladefluid, fluidverbindbar mit einer Brennkraftmaschine ausgelegt ist.

Vorteilhaft ist, dass ein Kompressor des zur Motoraufladung vorgesehenen im Wesentlichen gasförmigen Fluids und/oder ein separater Kältemittelkompressor zum Betrieb des Kondensators ausgelegt ist.

Vorteilhaft isst, dass zum Aufladen des Kältepotenzials Mittel) zu einer vom Betriebszustand des Motors abhängigen Beströmung der zweiten Strömungsführung vorgesehen sind, insbesondere Ladefluid-stromaufwärts des Speichers, insbesondere Speicherverdampfers, ein Bypass-Organ, insbesondere eine Bypassklappe, vorgeschaltet ist.

Vorteilhaft ist, dass eine Bypassklappe nur zur Umgehung des Speichers, insbesondere Speicherverdampfers, vorgesehen ist.

Vorteilhaft ist, dass Ladefluid-stromaufwärts des Speichers, insbesondere eines Beströmungsmittels, vorzugsweise eines Bypass-Organs, ein Ladefluid-Wärmetauscher, insbesondere -Kühler vorgeschaltet ist.

Vorteilhaft ist, dass Ladefluid-stromabwärts des Speichers, insbesondere Speicherverdampfers, der Motor nachgeschaltet ist.

Vorteilhaft ist, dass Ladefluid-stromabwärts des Speichers, insbesondere des Speicherverdampfers, insbesondere stromabwärts des Motors, eine Abgasturbine nachgeschaltet ist.

Vorteilhaft ist, dass eine Abgasturbine antriebsseitig an einen Kompressor gekoppelt ist, vorzugsweise eines Ladefluidkompressors und/oder eines separaten Kältemittelkompressors, insbesondere auch zum Betrieb eines Kondensators.

Vorteilhaft ist, dass der Kondensator zur Versorgung sowohl des Speichers zum Speichern eines Kältepotenzial als auch des Verdampfers der Klimaanlage ausgelegt ist.

Vorteilhaft ist ein Verfahren zum Kühlen eines zur Motoraufladung vorgesehenen im Wesentlichen gasförmigen Fluids, insbesondere einer Ladeluft und/oder eines Abgases oder Mischungen aufweisend eine Ladeluft und/oder ein Abgas, insbesondere mit einem Speicher und/oder einem Kreislauf und/oder einer Klimaanlage, aufweisend die Schritte:
- Bereitstellen des gasförmigen Fluids zur Motoraufladung, insbesondere in komprimierter und/oder vorgekühlter Form, an einer zur Motoraufladung vorgesehenen zweiten Strömungsführung, insbesondere Zuführung und Abführung, für das im wesentlichen gasförmige Aufladefluid eines Speichers zum Speichern eines Kältepotenzials;
- Durchführen und Kühlen des gasförmigen Aufladefluids in dem Speicher um Speichern eines Kältepotenzials unter Abgabe des Kältepotenzials an das Aufladefluid;
- Aufladen des Kältepotenzials des Speichers über eine erste Strömungsführung, insbesondere Zuführung und Abführung, für ein Kältefluid.

Vorteilhaft ist, dass das Aufladen eines Verdampfers einer Klimaanlage über einen Kondensator, insbesondere unter Nutzung eines dafür vorgesehenen Kompressorantriebs zum komprimieren des Kühlmittels, zusammen mit dem Aufladen des Kältepotenzials des Speichers über eine erste Strömungsführung erfolgt.

Vorteilhaft ist, dass ein Aufladen außerhalb eines Vortriebzustands des Motors, insbesondere Beschleunigungszustands des Motors, erfolgt, vorzugsweise in einem Schubbetriebzustand eines Motors, insbesondere immer, insbesondere immer nur, in einem Schubbetriebzustand, des Motors erfolgt.

Vorteilhaft ist, dass ein Öffnen eines Bypasses für das gasförmige Aufladefluid unter Umgehung des Speichers, im Schubbetrieb, insbesondere nur im Schubbetrieb, erfolgt.

Vorteilhaft ist, dass ein Abschalten des Aufladens des Kältepotenzials des Speichers im Volllastbetrieb, insbesondere nur im Volllastbetrieb, vorzugsweise unter Bypass-Schließung im Volllastbetrieb, erfolgt.

Vorteilhaft ist, dass eine Verdampfersolltemperatur über 1.6°C, vorzugsweise über 5°C, insbesondere über 8°C liegt, vorzugsweise mit einem Toleranzbereich bei 1 bis 3K, insbesondere bis zu 5K.

Im Einzelnen zeigt die Zeichnung in:
- Fig. 1:: eine schematische Blockschaltbilddarstellung einer besonders bevorzugten Ausführungsform gemäß dem grundsätzlichen Konzept der Erfindung;
- Fig. 2:: eine schematische Darstellung in Form eines Gesamtschaltbildes einer besonders bevorzugten Ausführungsform gemäß dem weitergehenden voll ausgebauten Konzept der Erfindung.
- Fig. 3:: Ansichten (A), (B) und (C) eines Speicherverdampfers.

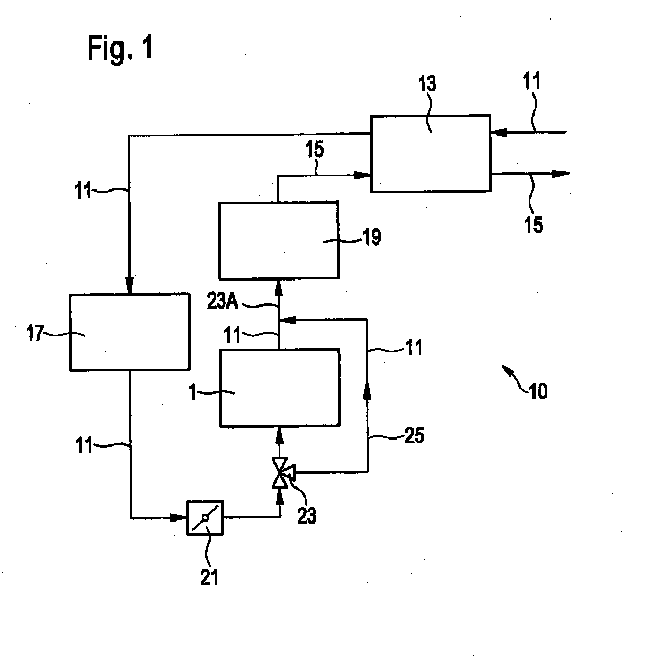

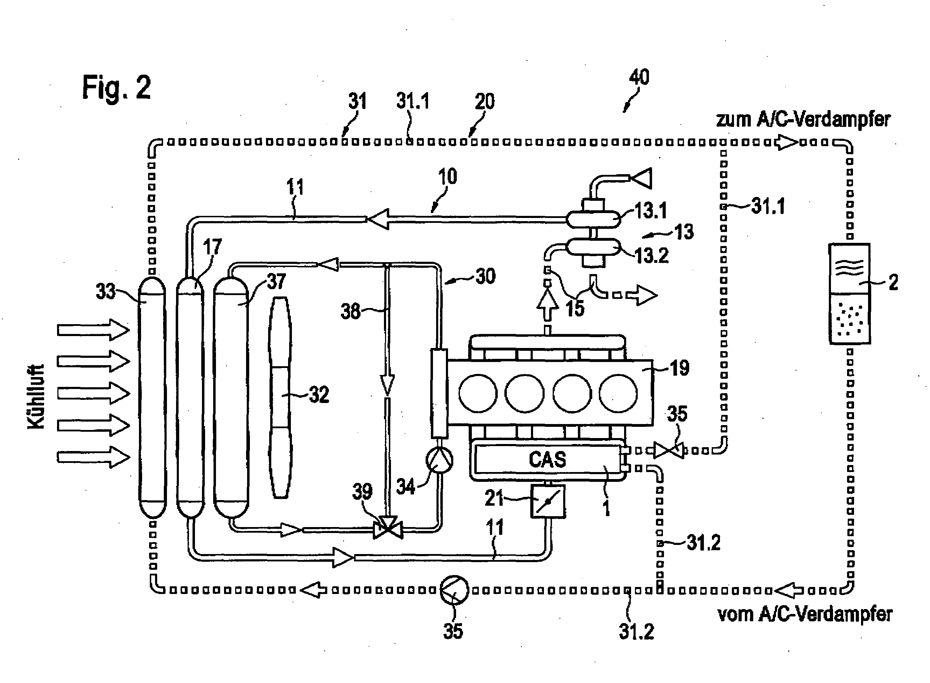

Fig. 1 zeigt in schematischer Ansicht einen Kreislauf 10 zur Motoraufladung mit einer Ladeluft 11, welche über einen Turbolader 13 in komprimierter Form einem Ladeluftkühler 17 zugeführt wird. Der Kompressor 13.1 des Turboladers 13 wird über eine in Fig. 2 näher dargestellte, von einem Abgas 15 angetriebene Turbine 13.2 angetrieben, wobei das Abgas 15 an einer Ausgangsseite eines Motors 19 zur Verfügung gestellt wird. Der Ladeluftkreislauf 10 gemäß dem Konzept der Erfindung weist vorliegend einen Speicher 1 in Form eines Speicherverdampfers zum Speichern eines Kältepotentials auf. Dem Speicherverdampfer 1 kann die Ladeluft 11 in komprimierter und vorgekühlter Form gemäß dem in Fig. 1 dargestellten Schema über ein Regelorgan, beispielsweise über eine zum Betrieb des Motors ausgelegte Drosselklappe 21 und ein Dreiwegeventil 23, zugeführt werden. In einer abgewandelten Ausführungsform kann dem Speicherverdampfer 1 zur Ladeluftkühlung die vorgekühlten Ladeluft auch direkt zugeführt werden und eine Drosselklappe 21 des Motors 19 kann ebenso dem Speicherverdampfer 1 nachgeschaltet sein. Das vorliegend als Regelorgan zur Schaltung eines luftseitigen Bypasses 25 ausgelegte Dreiwegeventil 23 ist stromaufwärts des Speicherverdampfers 1 angeordnet, um - für den Fall, dass dem Motor keine durch den Speicherverdampfer 1 zusätzlich gekühlte Ladeluft 11 zur Verfügung gestellt werden soll - dem Bypass 25 die lediglich durch den Ladeluftkühler 17 gekühlte Ladeluft 11 zuzuführen, so dass die Ladeluft 11 in diesem Zustand an der Stelle 23A direkt hinter dem Speicherverdampfer der Hauptleitung und danach dem Motor 19 zur Ladeluftaufladung des Motors zugeführt wird. Wie die Drosselklappe 21 kann auch ein vorliegend als ein Dreiwegeventil 23 ausgebildetes weiteres oder anderes Regelorgan für den Bypass stromabwärts des Speicherverdampfers angeordnet sein, beispielsweise an der Stelle 23A.

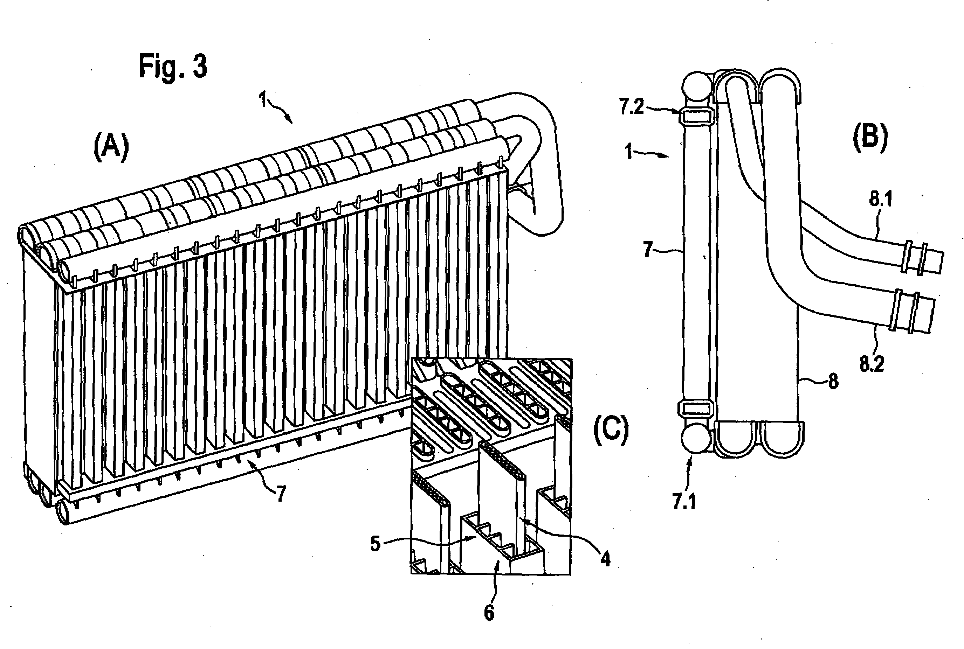

Eine mögliche Ausführungsform eines Speicherdampfers 1 ist beispielhaft in Fig. 3 gezeigt, wobei Fig. 3 in der Ansicht (A) den beispielhaften Speicherverdampfer in einer perspektivischen Ansicht zeigt, Fig. 3 in Ansicht (B) den Speicherverdampfer von einer anschlussseitigen Seite zeigt und Fig. 3 in Ansicht (C) die Anordnung eines Speicherraums und Verdampferraums im Speicherverdampfer beispielhaft dargestellt.

Der in Ansicht (A) der Fig. 3 dargestellte Speicherverdampfer 1 weist eine zur Aufladung des Kältepotentials vorgesehene erste Strömungsführung in Form einer Kältemittelzuführung 8.1 und einer Kältemittelabführung 8.2 auf. Das Kältemittel wird einem aus Ansicht (C) der Fig. 3 erkennbaren Verdampferraum 4 - innenliegend in einem zweischaligen Rohr 6 - strömend zugeführt, wobei das Kältefluid im Betriebsreich grundsätzlich verdampfungsfähig ist, beispielsweise als ein R134a - Kältefluid, und so seiner Umgebung Wärme entzieht. Das vorliegend im zweischaligen Rohr 6 in einem außenliegenden Speicherraum 5 aufgenommene Latentmedium kann somit im Betriebsbereich grundsätzlich erstarren und so ein gewisses Kältepotential speichern. Das auf diese Weise im Speicherelement 7 gespeicherte Kältepotential sieht entsprechend ausgelegte Sammler 7.1 für das Kältemittel bzw. 7.2 für das Latentmedium vor. Mit dem Speicherelement 7 wärmetauschend verbunden ist ein zum Wärmetausch mit dem Kältemittel ausgelegter Kühlbereich 8 mit nicht näher dargestellten Zuführungen für eine Ladeluft, um eine zusätzliche Ladeluftkühlung zu erreichen.

Die durch einen in Fig. 3 beispielhaft dargestellten Speicherverdampfer 1 zusätzliche gekühlte Ladeluft 11 kann somit gemäß einem in Fig. 1 beispielhaft dargestellten Kreislauf 10 zur Motoraufladung mit Ladeluft zur Verfügung gestellt werden.

Fig. 2 zeigt ein Gesamtschaltbild eines Systems 40 mit einem gemäß Fig. 1 erläuterten Ladeluftkreislauf 10 sowie einem Kühlmittelkreislauf 20 einer Klimaanlage als auch einem zur Motorkühlung vorgesehenen Hauptkühlkreislauf 30.

Für den Ladeluftkreislauf sind die gleichen Bezugszeichen wie in Fig. 1 verwendet, wobei der Turbolader 13 nunmehr mit dem Kompressor 13.1 und der zum Antrieb des Kompressors vorgesehenen Abgasturbine 13.2 schematisch dargestellt ist. Der anhand von Fig. 1 erläuterte Bypass 25 ist nicht abgebildet, gleichwohl ist der Bypass 25, vorliegend geregelt durch die als Bypass-Klappe eingesetzte Drosselklappe 21, vorhanden, um bei Bedarf mit einer entsprechenden Stellung der Drosselklappe 21 die durch den Ladeluftkühler 17 gekühlte Ladeluft am Speicherverdampfer 1 vorbei direkt dem Motor 19 zuzuführen. Die Drosselklappe dient insbesondere der Luftmengenregelung für den Motor, insbesondere der Leistungsregelung.

Der Kreislauf 20 einer Klimaanlage ist mit dem Kreislauf 10 zur Motoraufladung mit Ladeluft über den Speicherverdampfer 1 wärmetauschend verbunden - beispielsweise gemäß einem anhand von Fig. 3 erläuterten Wärmetauschprinzip für die Ladeluft. In dem Kreislauf 20 der Klimaanlage ist ein Kältefluid 31.1 im flüssigen Zustand geführt und wird auf der Hochdruckseite im flüssigen Zustand einem Kondensator 33 entnommen sowie einem zum Speicherverdampfer 1 im Ladeluftkreislauf 10 parallel geschalteten weiteren Verdampfer 2 der Klimaanlage zugeführt, um dort im gasförmigen Zustand als Kühlmittel 31.2 über einen Kompressor 35 zur Kompression auf der Hochdruckseite in dem Kondensator 33 durch Kondensation in den flüssigen Zustand überführt zu werden. In der aus Fig. 2 ersichtlichen Weise ist der Kondensator 33, der im Ladeluftkühlkreislauf geschaltete Speicherverdampfer 1 und der Verdampfer 2 der Klimaanlage parallel zueinander hinsichtlich des Kühlfluids 31 geschaltet. Das Kühlfluid 31.1 wird auf der Hochdruckseite in flüssigem Zustand - über ein Drosselventil 36 zur Druckanpassung an den im Speicherverdampfer 1 einzustellenden Siedepunkt für das Kühlmittel - dem Speicherverdampfer 1 zugeführt und im gasförmigen Zustand, als Kühlmittel 31.2, wieder dem Kühlmittelkreislauf der Klimaanlage und dem darin geschalteten Kompressor 35 zur Förderung an den Kondensator 33 zugeführt.

Der Betrieb des in Fig. 1 dargestellten Ladeluftkühlkreislaufs bzw. des Systems 40 in Fig. 2 aufweisend das Ladeluftkühlkreislauf 10 zur sogenannten Ladeluftunterkühlung mittels des Kältekreislaufs 20 der Klimaanlage stellt sich wie folgt dar:

Während einer Fahrt im Motorschubbetrieb wird der Kältemittelkompressor 35 mit 100 % seines Hubvolumens betrieben. Durch die Abschaltung der Kraftstoffversorgung in diesem Betriebszustand wird die erforderliche Antriebsleistung des Kompressors 35 allein aus der Bewegungsenergie des Fahrzeugs entnommen. Die dadurch bereitgestellte Kälteleistung wird in dem Speicherverdampfer 1 und/oder - je nach Systemzustand - auch in einem Speicherverdampfer 2 der Klimaanlage für die Innenraumklimatisierung eingespeichert. Während dieser Phase wird der Speicherverdampfer 1 für den Ladeluftkreislauf 10 durch Öffnen des Regelorgans - beispielsweise einer Drosselklappe 21 als Bypass-Klappe oder in Kombination mit einem in Fig. 1 gezeigten Dreiwegeventil 23 - luftseitig umgangen, da in diesem Betriebspunkt eine Abkühlung der Ladekluft grundsätzlich nicht notwendig ist. Gleichwohl kann selbstverständlich auch in diesem Zustand - soweit gewünscht und als Steuerungsfunktion verfügbar gemacht - dennoch die Ladeluft 11 über den Speicherverdampfer 1 zusätzlich gekühlt werden - letzteres würde, dem Konzept der Erfindung entgegenlaufend, gegebenenfalls eine nur unzureichende Kälteaufladung der Speicherverdampfer 1 und/oder 2 ermöglichen.

Nach der Verzögerung des Fahrzeugs im Schubbetrieb schließt sich häufig eine Beschleunigungsphase an. Hier ist die volle Motorleistung zum Fahrzeugvortrieb durchaus gewünscht. Deswegen kann ein Verfahren zur Ladeluftunterkühlung in diesem Fall vorsehen, dass der Kompressor 35 abgeschaltet wird. In diesem Fall wird die Ladeluft durch ein entsprechendes Regelorgan, beispielsweise 21, 23, über den Speicherverdampfer 1 für die Ladeluft 11 geführt, wobei sich durch die gespeicherte Kälteleistung auf die Ladeluft 11 übertragene Kälte eine zusätzliche Abkühlung der Ladeluft 11 ergibt. Dies wiederum führt gemäß dem erläuterten Konzept der Erfindung zu wesentlich günstigeren Verbrennungsbedingungen im Motor und damit zu mehr Leistung an der Antriebswelle.

Ist der Speicherverdampfer 1, konkret das in Bezug auf Fig. 3 erläuterte Kältepotenzial des Speichers 7 des Speicherverdampfers 1, erschöpft oder der Beschleunigungsvorgang beendet, wird der Kältekompressor 35 in konventioneller Weise zur bedarfsgerechten Bereitstellung der Kälteleistung für die Ladeluftunterkühlung und die Innenraumklimatisierung eingesetzt und geregelt.

Zusammenfassend geht die Erfindung aus von einem Speicher 1 zum Speichern eines Kältepotenzials, aufweisend: eine zur Aufladung des Kältepotenzials vorgesehene erste Strömungsführung für ein Kältefluid 31, eine zur Motoraufladung vorgesehene zweite Strömungsführung für ein im Wesentlichen gasförmiges Aufladefluid 11, wobei zur Verbesserung der Kühlung des Aufladefluids erfindungsgemäß vorgesehen ist, dass das Kältepotenzial zur Kühlung des zur Motoraufladung vorgesehenen gasförmigen Aufladefluids 11 vorgesehen ist. Die Erfindung führt auch auf einen Kreislauf 10 zur Motoraufladung mit dem Speicher 1 sowie ein System 40 aus dem Kreislauf 10 und einer Klimaanlage 20 sowie ein Verfahren zum Kühlen eines zur Motoraufladung vorgesehenen im Wesentlichen gasförmigen Fluids.

Insgesamt ergeben sich somit als Vorteile dieses Konzepts die Nutzung der sonst in Wärme umgesetzten Bewegungsenergie eines Fahrzeugs während des Schub- bzw. Bremsbetriebs für die Erzeugung von Kälteleistung und die Zwischenspeicherung dieser Leistung in Betriebsphasen, in denen der Kältekreislauf aus Gründen des Fahrzeugvortriebs stillsteht. Des Weiteren ermöglicht eine luftseitige Bypassklappe 21 als Regelorgan am Speicherverdampfer 1 im Ladeluftkreislauf 10 die bedarfsgerechte Temperierung der Ladeluft in Phasen, in denen aus Gründen der Entdrosselung des Motors eine tiefe Abkühlung der Ladeluft nicht von Vorteil ist.

Wie in Fig. 2 weiter gezeigt, erfolgt die Hauptkühlung des Motors 19 in einem üblichen Hauptkühlkreislauf 30 über einen Kühlmittelkühler 37, wobei eine übermäßige Kühlung des Motors 19, z.B. in Startphasen umgangen werden kann. Ein Regelorgan, vorliegend in Form eines Dreiwegeventils 39 schaltet einen Bypass 38 zur Umgehung des Hauptkühlers 41 des Motors 19 für das Kühlmittel der Hauptkühlung 30. Das Kühlmittel des Hauptkühlkreislaufs 30 wird durch eine Pumpe 34 umgewälzt.

Insgesamt wird die Anordnung eines Kondensators 33, eines Ladeluftkühlers 17 und Kühlmittelkühlers 37 vorliegend vergleichsweise kompakt ausgeführt und mit einem für alle drei Elemente 33, 17, 37 vorgesehenen Luftansaugelement 32 in Form eines Lüfters für Kühlluft versehen.

## Patentansprüche

1. Speicher zum Speichern eines Kältepotenzials, aufweisend:
- eine zur Aufladung des Kältepotenzials vorgesehene erste Strömungsführung, insbesondere Zuführung und Abführung, für ein Kältefluid (31), **gekennzeichnet durch**
- eine zur Motoraufladung vorgesehene zweite Strömungsführung, insbesondere Zuführung und Abführung, für ein im Wesentlichen gasförmiges Aufladefluid, insbesondere eine Ladeluft und/oder ein Abgas oder Mischungen aufweisend eine Ladeluft und/oder ein Abgas, wobei
- das Kältepotenzial zur Kühlung des zur Motoraufladung vorgesehenen gasförmigen Aufladefluids vorgesehen ist.

2. Speicher nach Anspruch 1 **dadurch gekennzeichnet, dass**
die erste Strömungsführung fluidverbindbar mit einem Verdampfer (2) und/oder Kondensator (33) einer Klimaanlage ausgelegt ist.

3. Speicher nach Anspruch 1 oder 2 **dadurch gekennzeichnet, dass** zum Aufladen des Kältepotenzials eine vom Betriebszustand des Motors (19) abhängige Beströmung der zweiten Strömungsführung erfolgen kann, insbesondere ein Bypass-Organ (25) zur vom Betriebszustand des Motors abhängige Beströmung der zweiten Strömungsführung vorgesehen ist.

4. Speicher nach einem der Ansprüche 1 bis 3 in Form eines Speicherverdampfers mit einem Speicherraum (5) zur Aufnahme eines Latentmediums und einem Verdampferraum (4) zur strömenden Aufnahme des Kältefluids.

5. Speicher nach einem der Ansprüche 1 bis 4 **dadurch gekennzeichnet, dass** ein Speicherverdampfer einen relativ zueinander außenliegenden Speicherraum (5) zur Aufnahme eines Latentmediums und einen innenliegenden Verdampferraum (4) zur strömenden Aufnahme des Kältefluids aufweist.

6. Speicher nach einem der Ansprüche 1 bis 5 **dadurch gekennzeichnet, dass** das Latentmedium im Betriebsbereich grundsätzlich erstarrungsfähig ist, vorzugsweise ein Alkohol ist und/oder das Kältefluid im Betriebsbereich grundsätzlich verdampfungsfähig ist, vorzugsweise ein R134a-Kältefluid.

7. Speicher nach einem der Ansprüche 1 bis 6 **dadurch gekennzeichnet, dass** ein Speicherraum (5) und Verdampferraum (4) in einem zweischaligen Rohr (6) gebildet ist, wobei eine Anzahl solcher Rohre (6) in einem Gehäuse eines Speicherverdampfers (1) angeordnet sind.

8. Kreislauf (10) zur Motoraufladung, insbesondere Ladeluftkreislauf und/oder Abgasrückführkreislauf, mit einem Speicher (1) zum Speichern eines Kältepotenzials nach einem der Ansprüche 1 bis 7.

9. Kreislauf nach Anspruch 8 **dadurch gekennzeichnet, dass** die erste Strömungsführung zum Aufladen des Kältepotenzials für ein Kältefluid mit einem Verdampfer und/oder Kondensator (33) einer Klimaanlage fluidverbunden ist, insbesondere die erste Strömungsführung zur Aufladung des Kältepotenzials für ein Kältefluid an einen Kältemittel-Kreislauf (20) einer Klimaanlage angeschlossen ist.

10. Kreislauf nach Anspruch 8 oder 9 **dadurch gekennzeichnet, dass** der Speicher (1) zum Speichern eines Kältepotenzial zu dem Verdampfer und/oder Kondensator (33) der Klimaanlage parallel geschaltet ist, insbesondere der Kondensator (33) zur Versorgung sowohl des Speichers (1) zum Speichern eines Kältepotenzials als auch des Verdampfers (2) der Klimaanlage ausgelegt ist.

11. Klimaanlage (20) mit einem Verdampfer (2) und/oder Kondensator (33), fluidverbunden mit einer zur Aufladung des Kältepotenzials vorgesehenen ersten Strömungsführung, insbesondere Zuführung und Abführung, für ein Kältefluid eines Speichers (1) nach einem der Ansprüche 1 bis 9 und/oder eines Kreislaufs (11) nach einem der Ansprüche 8 bis 10.

12. Klimaanlage nach Anspruch 20 **dadurch gekennzeichnet, dass** der Speicher (1) zum Speichern eines Kältepotenzial zu dem Verdampfer (2) und/oder Kondensator (33) der Klimaanlage parallel geschaltet ist.

13. System (40) aus einem Kreislauf (10) nach einem der Ansprüche 8 bis 12 und/oder einer Klimaanlage (20) nach einem der Ansprüche 11 und 12.

14. System (40) nach Anspruch 13 weiter aufweisend einen Kühlmittelkreislauf (30) zur Motorkühlung, insbesondere einen Kühlmittelkreislauf mit Kühlmittelkühler (41).

15. System (40) nach Anspruch 13 oder 14 **dadurch gekennzeichnet, dass** im Kühlmittelkreislauf (30) eine Pumpe (34) und/oder ein Leitmittel (39) zur Führung des Kühlmittels, zum Motor und/oder am Motor vorbei, vorgesehen ist.
